# EUROPÄISCHE PATENTANMELDUNG

(11) **EP 0 634 310 A1**
(43) Veröffentlichungstag der Anmeldung: **18.01.1995**
(21) Anmeldenummer: 94111138.7
(22) Anmeldetag: 18.07.1994
(51) Int. Cl.: B60R 25/02

(54) **Ausrastbare Lenksäulenverriegelung**

(30) Priorität: 16.07.1993 DE 4323915
(71) Anmelder: ITT Automotive Europe GmbH, D-60488 Frankfurt am Main (DE)
(72) Erfinder: Engelhardt, Martin, D-74189 Weinsberg (DE); Hecht, Walter, D-74321 Bietigheim-BIssingen (DE)
(74) Vertreter: Portwich, Peter

(57) **Zusammenfassung**

Die Lenksäule (2) besitzt eine umlaufende Konsole (7), an der sich eine Spiralfeder (8) abstützt. Das von der Konsole (7) entfernte Ende der Spiralfeder (8) wirkt auf einen Ausnehmungskörper (9) ein, der eine Reihe zueinander paralleler Ausnehmungen (10) aufweist. Die Ausnehmungen (10) sind durch zueinander parallele offene Nuten gebildet, die gleichmäßig über die Mantelfläche des im wesentlichen ringförmigen Ausnehmungskörpers verteilt sind. Der Ausnehmungskörper ist auf der Lenksäule (2) in deren Längsrichtung verschiebbar und gegenüber der Lenksäule (2) drehbar gelagert.

Für die Erfindung wesentlich ist auch eine an der oberen Stirnfläche angeordnete symmetrische Verzahnung (11), die unter der Kraft der Spiralfeder (8) in eine entsprechende Verzahnung (12) eingreift, die gegenüber der Lenksäule (2) fixiert ist. Die Verzahnung (12) ist an einer Zahnbuchse (13) angebracht, die auf die Lenksäule (2) aufgeschoben und mit ihr, beispielsweise durch Schrumpfen, Verschweißen o.ä., unlösbar verbunden ist.

## Beschreibung

Die Erfindung betrifft eine Lenksäulenverriegelung für Fahrzeuge.

Bei den bekannten Lenkschlössern ragt ein gegenüber dem Fahrzeug in Riegellängsrichtung verschiebbarer Riegel in eine gegenüber der Lenksäule fixierte Ausnehmung. Nachteilig bei den bekannten Lenkschlössern ist es, daß durch ein gewaltsames Drehen der Lenksäule schließlich eine derartige Kraft auf den in die Ausnehmung ragenden Riegel aufgebracht werden kann, daß die sich in Drehbewegung befindliche Ausnehmung den fahrzeugfesten Riegel abbricht. Selbst wenn der Riegel der Gewalteinwirkung standhält, besteht die Gefahr, daß das gesamte Schloß aus der Senksäule herausgerissen wird.

Die Erfindung geht daher aus von einer Lenksäulenverriegelung der sich aus dem Oberbegriff des Hauptanspruchs ergebenden Gattung. Aufgabe der Erfindung ist es, die bekannte Lenksäulenverriegelung derart abzuändern, daß ein Abbrechen des Riegels oder ein Herausreißen des Senkschlosses durch einfache Mittel sicher verhindert wird.

Die Aufgabe wird durch die sich aus dem kennzeichnenden Teil des Anspruchs 1 ergebende Merkmalskombination gelöst.

Die Erfindung besteht im Prinzip also darin, bei verriegelter Lenksäule durchaus eine Bewegung der Lenksäule gegenüber dem Schloß zuzulassen, gleichzeitig aber dafür zu sorgen, daß die Lenkung derart schwergängig arbeitet, daß ein vernünftiges Steuern des Fahrzeuges unmöglich gemacht wird. Die Lösung gemäß Anspruch 1 läßt die beiden Möglichkeiten zu, daß bei Gewaltanwendung an der verriegelten Lenksäule sich entweder das Schloß mit der Säule gegenüber dem Fahrzeug oder aber die Ausnehmung an der Säule sich in ihre Lage gegenüber der Säule ändert. In vorteilhafter Weiterbildung empfiehlt sich die Merkmalskombination nach Anspruch 2, die die Möglichkeit erlaubt, im verriegelten Zustand die Lage der Ausnehmung gegenüber der Lenksäule zu ändern.

Eine weitere Verbesserung ist durch die Merkmalskombination nach Anspruch 3 gegeben, indem die Möglichkeit geschaffen wird, den die Ausnehmung enthaltenenden Ausnehmungskörper im verriegelten Zustand gegenüber der sich drehenden Lenksäule zu verdrehen bzw. den Körper gegenüber der drehenden Lenksäule fahrzeufest festzuhalten.

Die Erfindung erlaubt die Möglichkeit, durch Reibeingriff, Verkeilen o.ä. Maßnahmen eine Schwergängigkeit der Drehbewegung der Lenkung gegenüber dem Fahrzeug zu erreichen. In vorteilhafter Weiterbildung der Erfindung zeigt Anspruch 4 eine Merkmalskombination, die in besonders einfacher Weise in Richtung der Aufgabenlösung beiträgt. Durch die Merkmale nach Anspruch 4 wird in Schließstellung des Riegels ein Verdrehen der Lenksäule möglich, indem der Ausnahmekörper unter Kraftaufwand von einer Raststellung in die nächste springt.

Eine besonders einfache Ausgestaltung, um die Rastung der Lenksäule zu erzielen, ergibt sich durch die Merkmalskombination nach Anspruch 5. Dabei wird der Ausnehmungskörper federnd im Eingriff mit einer entsprechenden Lenksäulenverzahnung gehalten. Erst unter Krafteinwirkung wird über die schrägen Flächen der Verzahnung erreicht, daß eine Raststellung verlassen und nach Weiterdrehen unter Wirkung der Feder die nächste Raststellung eingenommen wird.

An sich ist es möglich, die Rastzähne auch sich radial zur Säulenlängsachse erstreckend anzuordnen. Eine besonders einfache Ausgestaltung ergibt sich aber durch die Merkmalskombination nach Anspruch 6, indem die Rastzähne in Längsrichtung der Lenksäule unter Federkraft verschiebbar sind.

Hierfür zeigt eine besonders einfache Weiterbildung die Merkmalskombination nach Anspruch 7. Dabei wird die Verzahnung des Ausnehmungskörpers sowie der Lenksäule jeweils in beiden Drehrichtungen symmetrisch sein, so daß unabhängig von der Drehrichtung der Lenksäule der Rasteffekt gewährleistet ist und somit auch unabhängig von der Drehrichtung der Schließriegel nicht abgebrochen werden kann.

Die Erfindung ist durchaus anwendbar, wenn nur eine einzige Ausnehmung in dem Ausnehmungskörper vorgesehen ist. Eine vorteilhafte Weiterbildung hierzu bietet aber die Merkmalskombination nach Anspruch 8, indem mehrere Ausnehmungen in den Ausnehmungskörper eingebracht sind. Auf diese Weise kann unabhängig von der Drehstellung der Lenksäule die Verriegelung und damit der Verriegelungseffekt vorgenommen werden. Es kann beispielsweise wichtig sein, wenn beim Parken am Berg das Lenkrad in eingeschlagener Stellung verriegelt werden muß.

Eine besonders einfache Konstruktion für die Rastwirkung ergibt sich durch die Maßnahmen nach Anspruch 9. Dabei wird eine sich an der Lenksäule abstützende Spiralfeder auf die Lenksäule aufgeschoben, die für die notwendige Vorspannung des Ausnehmungskörpers sorgt. Die Erfindung läßt es an sich zu, daß die lenksäulenseitige Verzahnung direkt auf die Lenksäule aufgebracht wird. Eine Verbesserung der Erfindung ergibt sich durch die Maßnahme nach Anspruch 10, indem eine in ihrer Verzahnung der Verzahnung des Ausnehmungskörpers entsprechende Buchse mit der Lenksäule fest verbunden wird. Hierdurch läßt sich die für die Lenksäule notwendige Verzahnung vergleichsweise einfach herstellen.

Ein Ausführungsbeispiel der Erfindung wird nachfolgend anhand der Zeichnung erläutert. Darin zeigt
- Fig. 1: in teilweise geschnittener Darstellung ein Lenkschloß im Eingriff mit einer Lenksäule und
- Fig. 2: einen Schnitt längs der Linie A-A in dem Ausführungsbeispiel nach Fig. 1.

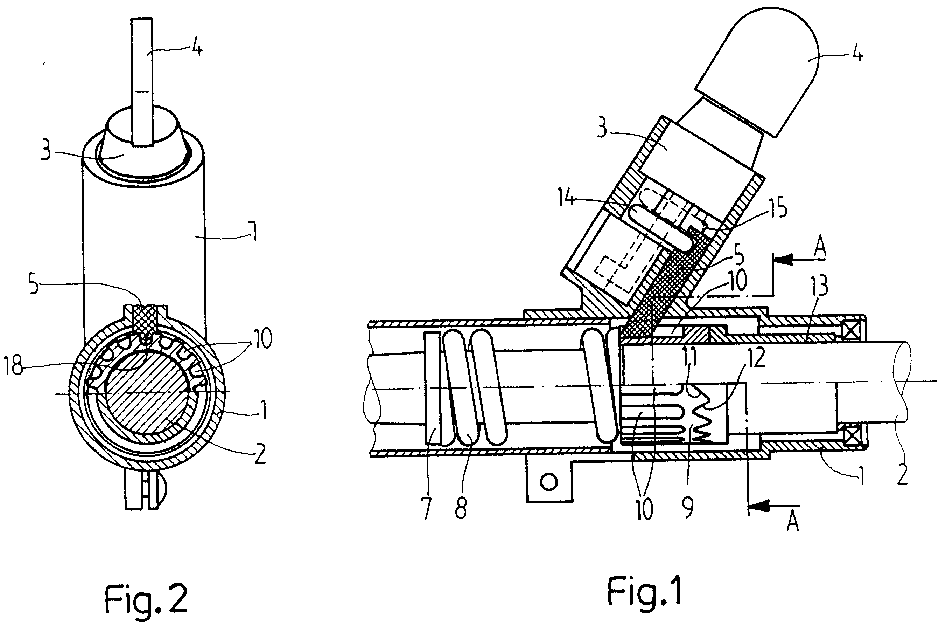

Aus Fig. 1 ist ein Gehäuse 1 ersichtlich, in welchem eine Lenksäule 2 drehbar aber nicht axial verschiebbar gelagert ist. In dem Gehäuse 1 ist in Fig. 1 auf der linken Seite noch ein Schloß 3 befestigt, über dessen Schlüssel 4 durch eine Drehbewegung ein Sperriegel 5 in seiner Längsrichtung auf- bzw. abbewegt werden kann.

Die Lenksäule 2 besitzt eine umlaufende Konsole 7, an der sich eine Spiralfeder 8 abstützt. Das von der Konsole 7 entfernte Ende der Spiralfeder 8 wirkt auf einen Ausnehmungskörper 9 ein, der eine Reihe zueinander paralleler Ausnehmungen 10 aufweist. Die Ausnehmungen 10 sind durch zueinander parallele offene Nuten gebildet, die gleichmäßig über die Mantelfläche des im wesentlichen ringförmigen Ausnehmungskörpers verteilt sind. Der Ausnehmungskörper ist auf der Lenksäule 2 in deren Längsrichtung verschiebbar und gegenüber der Lenksäule 2 drehbar gelagert.

Für die Erfindung wesentlich ist auch eine an der oberen Stirnfläche in Fig. 1 angeordnete symmetrische Verzahnung 11, die unter der Kraft der Spiralfeder 8 in eine entsprechende Verzahnung 12 eingreift, die gegenüber der Lenksäule 2 fixiert ist. Die Verzahnung 12 ist an einer Zahnbuchse 13 angebracht, die auf die Lenksäule 2 aufgeschoben und mit ihr, beispielsweise durch Schrumpfen, Verschweißen o.ä., unlösbar verbunden ist.

Im ungesperrten Zustand ist der Sperriegel abweichend von Fig. 1 angehoben, wobei der Transportwulst 14 die gestrichelt angedeutete obere Lage erreicht, wobei das dem Schloß 3 zugewandte Ende des Sperriegels 5 an eine umlaufende Kante 15 des Schlosses 3 anstoßen kann. Wichtig für die Arbeitsweise der Verriegelung ist es, daß das der Ausnehmung 10 zugewandte Ende nicht in diese ragt, sondern außerhalb der Außenfläche des Ausnehmungskörpers 9 verbleibt. Da durch die Kraft der Spiralfeder 8 der Ausnehmungskörper 9 gegen die Zahnbuchse 13 gepreßt wird und die Verzahnungen 11,12 ineinandergreifen, folgt bei einer Drehbewegung der Lenksäule 2 der Ausnehmunsgkörper 9 dieser Bewegung, ohne hier eine Hemmkraft entgegenzusetzen.

Wird durch eine entsprechende Drehbewegung des Schlüssels 4 der Sperriegel 5 in die in Fig. 1 gezeigte Schließstellung gebracht, so ragt sein unteres Ende in eine der Ausnehmungen 10. Unter der Annahme, daß der Ausnehmungskörper 9 unlösbar mit der Lenksäule 2 verbunden ist, könnte durch eine Drehbewegung der Lenksäule 2 das untere Ende des Sperriegels 5 abgebrochen oder das Schloß 3 aus dem Gehäuse 1 herausgerissen werden.

Dem begegnet die Erfindung dadurch, daß der Ausnehmungskörper sowohl längs verschiebbar als auch drehbar auf der Lenksäule 2 angeordnet ist. Wird nämlich in der in Fig. 1 gezeigten Stellung des Sperriegels 5 die Lenksäule 2 mit großer Kraft gedreht, so wird gleichwohl der Ausnehmungskörper 9 durch den Sperriegel 5 in seiner Drehstellung festgehalten. Das über die Lenksäule 2 ausgeübte Drehmoment führt nur dazu, daß die schrägen Zahnflanken der Verzahnung 12 der Zahnbüchse 13 auf die zugeordneten Zahnflanken der Verzahnung 11 des Ausnehmungskörpers einwirken. Da dieser eine Drehbewegung wegen des in die Ausnehmung 10 eingreifenden Sperriegels nicht durchführen kann, fühlt er infolgedessen eine Bewegung in Längsrichtung der Lenksäule 2 entgegen der Kraft der Spiralfeder 8 aus. Sobald die Zahnspitzen der Verzahnung 10 schließlich auf den Zahnspitzen der Verzahnung 12 aufsitzen, ist die weiteste Auslenkung des Ausnehmunsgkörpers in axialer Richtung gegen die Kraft der Feder 8 erreicht und die nachfolgende Drehbewegung führt wieder dazu, daß die Zähne vermehrt ineinandergreifen, bis sie wieder eine Lage erreicht haben, die der in Fig. 1 entspricht.

Es ist verständlich, daß aufgrund der Reibungskräfte zwischen den Verzahnungen 11,12 und bedingt durch die Kraft der vergleichsweise starken Feder 8 erhebliche Drehmomente aufgebracht werden müssen, damit die Lenksäule 2 unter den drehfest angeordneten Ausnehmungskörper 9 ratschenartig gedreht werden kann. Die durch die Kraft der Feder und den Steigungswinkel der Zahnflanken einstellbare Kraft ist dabei so bemessen, daß zwar der Aufbau des Schlosses und des Sperriegels 5 stark genug sind, um durch die auf den Ausnehmungskörper 9 ausgeübte Drehkraft nicht beschädigt zu werden. Andererseits ist die auf die Lenksäule 2 zu deren Drehbewegung notwendige Kraft derart groß gewählt, daß vernünftige Lenkbewegungen durch die Lenksäule nicht mehr ausgeführt werden können. Aus Fig. 2 ist zu erkennen, daß die Ausnehmungen 10 im Querschnitt zu Zwecken der Zentrierung gerundet sind. Der Sperriegel greift dabei in die Ausnehmung 10 nur mit einem abgesetzten Abschnitt 18 ein. Der abgesetzte Abschnitt hat den Zweck, eine größere Anzahl Nuten auf dem Ausnehmungskörper unterzubringen.

## Patentansprüche

1. Lenksäulenverriegelung für Fahrzeuge, bei der im verriegelten Zustand ein in seiner Längsachse gegenüber dem Fahrzeug verschiebbarer Sperriegel (5) in eine der Lenksäule (2) zugeordnete Ausnehmung (10) eingreift und so eine Drehebwegung der Lenksäule (2) verhindert, dadurch **gekennzeichnet,** daß bei Ausübung eines Drehmoments auf die Säule (2) in deren verriegelten Zustand (Fig. 1) die Lage der Ausnehmung (10) gegenüber der Säule (2) veränderbar ist.

2. Verriegelung nach Anspruch 1, dadurch **gekennzeichnet,** daß die Ausnehmung (10) in einem Ausnehmungskörper (9) angeordnet ist, der gegenüber der Lenksäule (2) bewegbar angeordnet ist.

3. Verriegelung nach Anspruch 2, dadurch **gekennzeichnet,** daß der Ausnehmungskörper (9) derart angeordnet ist, daß er im Verriegelungszustand aufgrund eines auf die Lenksäule (2) ausgeübten Drehmoments eine Drehbewegung gegenüber der Lenksäule (2) erlaubt.

4. Verriegelung nach Anspruch 3, dadurch **gekennzeichnet,** daß der Ausnehmungskörper (9) gegenüber der Lenksäule (2) eine Reihe von Raststellungen aufweist und der Ausnehmungskörper (9) die Raststellungen wechselt, wenn unter dem durch den Sperriegel (5) festgehaltenen Ausnehmungskörper (5) die Lenksäule (2) mit einem hinreichend großen Drehmoment um ihre Längsachse gedreht wird.

5. Verriegelung nach einem der vorangegangenen Ansprüche, dadurch **gekennzeichnet,** daß der Ausnehmungskörper (9) ein in Längsrichtung der Lenksäule federnd beaufschlagter Ring mit einer Stirnverzahnung ist, der eine an der Lenksäule (2) fest verankerte entsprechende Stirnverzahnung (12) zugeordnet ist.

6. Verriegelung nach Anspruch 5, dadurch **gekennzeichnet,** daß die beiden einander zugeordneten Stirnverzahnungen in Umfangsrichtung symmetrisch verlaufen.

7. Verriegelung nach Anspruch 6, dadurch **gekennzeichnet,** daß die beiden Stirnverzahnungen gegeneinander unter der Wirkung der Feder verrasten und daß durch eine Drehbewegung der Lenksäulenverzahnung gegenüber der in Drehrichtung verriegelten Verzahnung (11) des Ausnehmungskörpers (9) der Ausnehmungskörper in axialer Richtung entgegen der Federkraft aus der Verrastung geschoben und durch eine weitergehende Drehbewegung danach in die nächste Raststellung geschoben wird.

8. Verriegelung nach einem der Ansprüche 1 bis 7, dadurch **gekennzeichnet,** daß mehrere Ausnehmungen (10) vorgesehen sind, wobei die Ausnehmungen vorzugsweise durch in die Mantelfläche des ringförmigen Ausnehmungskörpers (9) eingebrachte, in Längsrichtung der Lenksäule verlaufende offene Nuten ausgeführt sind.

9. Verriegelung nach einem der vorangegangenen Ansprüche, dadurch **gekennzeichnet,** daß die Feder (8) eine sich an einer umlaufenden Konsole (7) der Lenksäule (2) abstützende, auf der Lenksäule (2) sitzende Spiralfeder (8) ist.

10. Verriegelung nach einem der vorangegangenen Ansprüche, dadurch **gekennzeichnet,** daß die Verzahnung (12) der Lenksäule (2) durch eine mit der Lenksäule fest verbundene stirnverzahnte Buchse (13) gebildet ist.
